Europäisches Patentamt

European Patent Office

Office européen des brevets

(11) Publication number: **0 089 794**
A2

# EUROPEAN PATENT APPLICATION

(21) Application number: 83301386.5

(22) Date of filing: 14.03.83

(51) Int. Cl.³: **B 62 D 33/06**
**B 60 G 17/04**

(30) Priority: 19.03.82 GB 8208064

(43) Date of publication of application:
28.09.83 Bulletin .83/39

(84) Designated Contracting States:
DE FR IT SE

(71) Applicant: LUCAS INDUSTRIES public limited company
Great King Street
Birmingham, B19 2XF(GB)

(72) Inventor: Nicholls, Lawrence George
48 Arden Road
Acocks Green Birmingham B27 6AQ(GB)

(74) Representative: Spall, Christopher John et al,
BARKER, BRETTELL & DUNCAN 138 Hagley Road
Edgbaston Birmingham B16 9PW(GB)

(54) Vehicle suspension systems.

(57) A suspension system for a driver's compartment of a vehicle, for example, a cab of a commercial vehicle, has a plurality of suspension units ($R_1-R_4$) providing soft suspension characteristics for the driver's comfort, and means (E) for selectively stiffening their suspension characteristics in accordance with certain kinds of movement of the vehicle. These kinds of movement include pitch, roll and bounce, and the struts are selsectively stiffened in order to counter the effect on the driver's compartment of these movements.

Each suspension unit may include a volume of gas (4) in communication with a gas spring (7), from which it can be isolated to stiffen the suspension characteristics. The means for selectively stiffening the units is preferably an electronic control system (E) which is operative in response to the movements of the vehicle, and includes solenoid-operated valves ($V_1-V_4$) to control communication between the units ($R_1-R_4$) and the gas spring (7). The system may be supplied from an air-brake system of the vehicle.

FIG 1

Croydon Printing Company Ltd.

## VEHICLE SUSPENSION SYSTEMS

This invention relates to a suspension system for the driver's compartment of a vehicle.

In many instances very soft (low frequency) suspension characteristics are required in order to provide a comfortable ride, particularly in the case of heavy commercial vehicles which may be driven for many hours at a stretch. However, such characteristics can isolate the driver to such an extent that he loses his awareness of the prevailing road conditions and performs steering actions which put the vehicle at risk.

It is this problem with which the present invention is mainly concerned.

According to our invention, a suspension system for the driver's compartment of a vehicle includes a plurality of suspension units which provide soft suspension characteristics for the driver's comfort, and means for selectively stiffening their suspension characteristics in accordance with certain kinds of movement of the vehicle.

The kinds of movement which give rise to the selective stiffening include at least one, preferably more, of pitch, roll and bounce, the suspension units being stiffened selectively so as to counter the effect on the driver's compartment of the movements concerned.

Preferably each suspension unit includes a volume of fluid which is in communication with a spring body from which the unit can be isolated to stiffen its suspension characteristics.

Conveniently, the spring body may have a multi-stiffness function, so that it provides variable suspension characteristics for the system.

Preferably each suspension unit includes a volume of gas, which is in communication with a gas spring. All the suspension units may be served by a single gas spring.

The means for selectively stiffening the suspension units conveniently comprises an electronic control system responsive to the movements of the vehicle.

The movements of the vehicle need not be sensed directly, and indeed, it will usually be more convenient to sense other functions which are likely to give rise to the movements concerned. For example, pitch can be predicted by sensing application of the brakes, roll by sensing the appropriate movements of the steering gear, and bounce by sensing vertical acceleration of a vehicle axle.

The electronic control system may also operate to maintain the ride height of the driver's compartment within certain limits.

When each suspension unit includes a volume of gas which is in communication with a gas spring, the control system conveniently includes solenoid-operated valves for controlling communication between the units and the gas spring.

The gas employed may be air, the system then being operated from an air-brake system of the vehicle.

An embodiment of the invention will now be described, by way of example only, with reference to the accompanying drawings, of which:-

Figure 1 is a schematic layout of the suspension system, and

Figure 2 is a longitudinal section through one of the suspension units of the system.

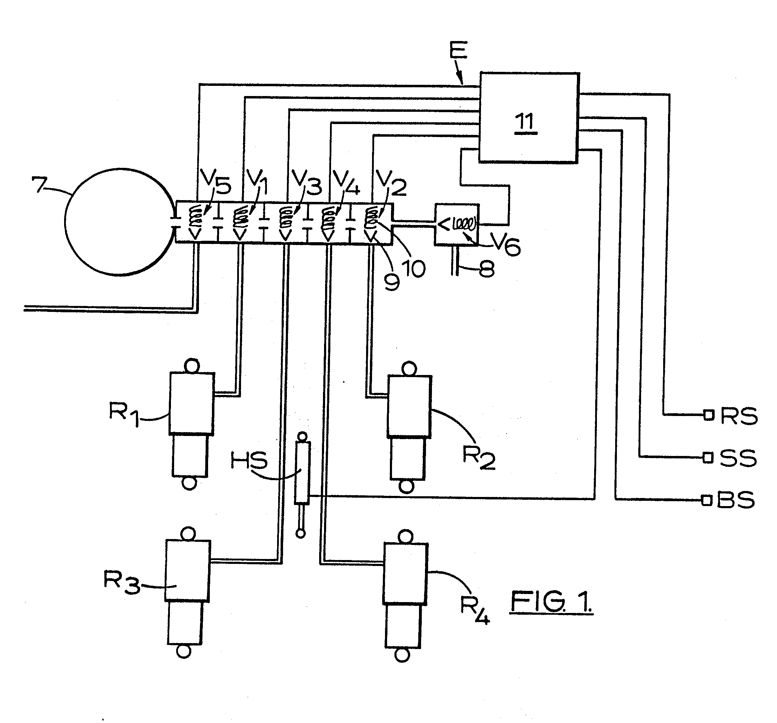

The suspension system shown in Figure 1 is for a driver's cab of a commercial vehicle. The system includes a plurality of suspension units which support the cab and provide soft suspension characteristics, in the form of four suspension struts $R_1$-$R_4$ (of known design), and means for selectively stiffening their suspension characteristics in the form of an electronic control system E.

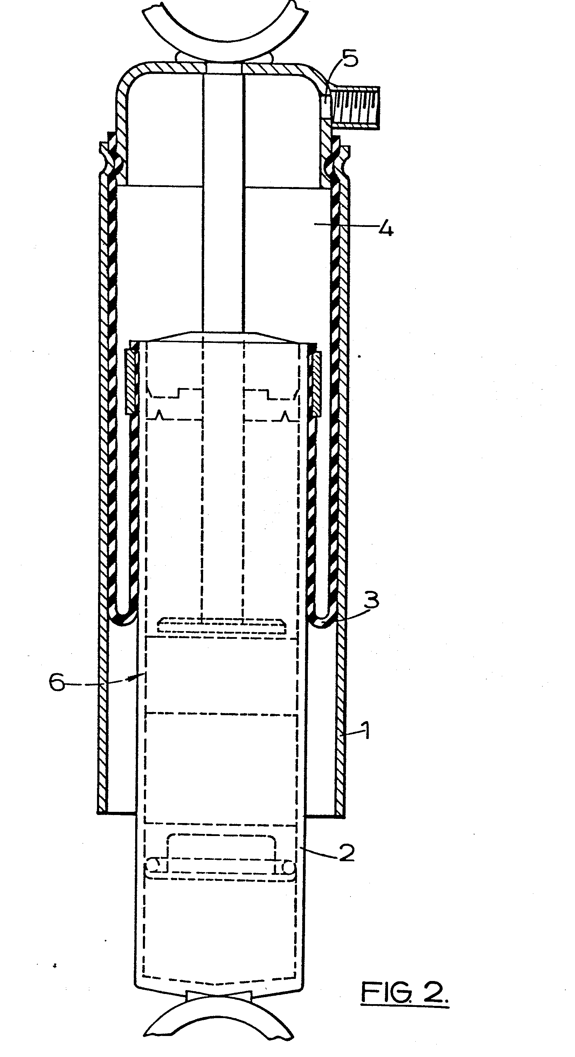

Briefly, each strut, as shown in Figure 2, comprises a pair of telescopic cylindrical members, 1, 2, sealed by a rolling diaphragm 3 to form an internal air chamber 4 having a single port 5. An hydraulic damper 6 is mounted within the telescopic members 1, 2. No steel springs are employed.

The air chamber 4 of each strut is connected to a main air spring 7 through the port 5 and a respective solenoid-operated valve $V_1$-$V_4$. The valves $V_1$-$V_4$ form part of the control system E, and control communication between the spring 7 and the struts $R_1$-$R_4$, enabling the struts to be isolated in order to stiffen their suspension characteristics. An air supply for the suspension system is provided from an air-brake system of the vehicle, and is connected to the air spring 7 through a further solenoid-operated valve $V_5$. The air spring 7 is also connected to an exhaust port 8 through a solenoid operated valve $V_6$. Valves $V_5$ and $V_6$ are also operated by the control sytem E. The valves illustrated have a conical shut-off member 9 operated by a solenoid 10, but may be of any convenient design.

The control system E has a microprocessor-based control circuit 11 for controlling the valves $V_1$-$V_6$, in response to movements of the vehicle, in this case pitch, roll and bounce. These movements are not sensed directly. Instead, pitch is sensed by a braking sensor BS which senses the fluid pressure in the vehicle brake lines, roll is sensed by a steering sensor SS which senses movements of the steering wheel, and bounce is sensed by a ride sensor RS which is associated with an axle of the vehicle to sense vertical accelerations caused by road surface conditions. In the case of a vehicle having a tractor and trailer the ride sensor is associated with an axle of the trailer. Signals from these sensors are fed to the circuit 11, as are signals from a single linear transducer HS of conventional design, which is mounted immediately below the centre of gravity of the cab to sense changes in cab ride height due to load changes. This enables the electronic control system E to maintain the ride height of the cab within certain limits.

Normally the valves $V_1$-$V_4$ are open to connect all the struts $R_1$-$R_4$ to the air spring 7, and valves $V_5$ and $V_6$ are closed to trap air in the air spring and struts. In steady state conditions the connection between the struts and the air spring 7 means that a soft suspension characteristic is provided for the comfort of the cab occupants. However, valves $V_1$-$V_4$ can be selectively closed in accordance with certain movements of the vehicle, isolating the respective strut from the main air spring 7. This results in an increase in the stiffness (resonant frequency) of the struts due to the fact that the volume of air which can be compressed is considerably reduced. The movements in question are as follows:

(i) Pitch

When sensor BS signals that the brake fluid pressure has risen beyond a predetermined level indicating that the brakes have been applied, valves $V_3$ and $V_4$ of the front struts $R_3$ and $R_4$ are closed. The resulting increase in stiffness of these struts limits the forward pitch of the cab.

(ii) Roll

When steering sensor SS signals that the vehicle is being steered in a curved path, valves $V_1$ and $V_3$ or $V_2$ and $V_4$ are closed, depending on the direction of steer, to isolate the struts on the inside of the curve and so limit the degree of roll of the cab.

(iii) Bounce

When the ride sensor RS signals that the vertical movement of the trailer or axle exceeds a predetermined range all four valves $V_1$-$V_4$ are closed, so that all the struts are isolated to increase the overall vertical stiffness of the cab suspension.

The spring frequencies of the isolated struts are largely determined by the strut sizes. The suspension frequency under steady state conditions can be set by selecting the dimensions of the main spring chamber. The main spring can be arranged to have a multi-stiffness function, so that it provides variable suspension characteristics for the system. In this situation additional solenoid valves are employed to select the appropriate degree of stiffness.

The control system E aims at keeping the ride height of the cab, as sensed by sensor HS, within certain limits. Thus, a reduction in ride height causes valve $V_5$ to open and allow air into the struts and an increase in height causes valve $V_6$ to open to vent the struts.

Although in the system described above the struts support the cab one at each corner, in some instances only three may be necessary, one midfront and two at the rear.

## CLAIMS

1.   A suspension system for the driver's compartment of a vehicle, characterised in that the system includes a plurality of suspension units $(R_1-R_4)$ which provide soft suspension characteristics for the driver's comfort, and means (E) for selectively stiffening their suspension characteristics in accordance with certain kinds of movement of the vehicle.

2.   A suspension system according to claim 1, characterised in that the kinds of movement include at least one of pitch, roll and bounce, the suspension units $(R_1-R_4)$ being stiffened selectively so as to counter the effect on the driver's compartment of the movement concerned.

3.   A suspension system according to claim 1 or claim 2, characterised in that each suspension unit $(R_1-R_4)$ includes a volume of fluid (4), which is in communication with a spring body (7), from which the unit can be isolated to stiffen its suspension characteristics.

4.   A suspension system according to claim 3, characterised in that the spring body (7) has a multi-stiffness function, so that it provides variable suspension characteristics for the system.

5.   A suspension system according to claim 3 or claim 4, characterised in that each suspension unit $(R_1-R_4)$ includes a volume of gas (4), which is in communication with a gas spring (7).

6.   A suspension system according to claim 5, characterised in that all the suspension units $(R_1-R_4)$ are served by a single gas spring (7).

7. A suspension system according to any preceding claim, characterised in that the means for selectively stiffening the suspension units ($R_1$-$R_4$) comprises an electronic control system (E) responsive to the movements of the vehicle.

8. A suspension system according to any preceding claim, characterised in that which the movements of the vehicle are sensed indirectly, by sensing functions which give rise to the movements.

9. A suspension system according to claim 7 or claim 8, characterised in that the electronic control system (E) also operates to maintain the ride height of the driver's compartment within certain limits.

10. A suspension system according to claim 7, characterised in that each suspension unit ($R_1$-$R_4$) includes a volume of gas (4), which is in communication with a gas spring (7), and the electronic control system (E) includes solenoid-operated valves ($V_1$-$V_4$) for controlling communication between the units ($R_1$-$R_4$) and the gas spring (7).

FIG. 1.

0089794

FIG. 2.